# EUROPEAN PATENT APPLICATION

(11) **EP 1 195 964 A1**
(43) Date of publication of application: **10.04.2002**
(21) Application number: 01114860.8
(22) Date of filing: 28.06.2001
(51) Int. Cl.: H04L 29/06

(54) **Communication system and communication method in accordance with extended protocol standard**

(30) Priority: 30.06.2000 JP 2000197943
(71) Applicant: NEC CORPORATION, Tokyo (JP)
(72) Inventor: Mizukoshi, Nobuyuki, Minato-ku, Tokyo (JP)
(74) Representative: VOSSIUS & PARTNER

(57) **Abstract**

A communication system includes first and second communication units. The first communication unit (1, 2) sends transmission data, a control sequence, and an extended control sequence. The control sequence is originally defined by a protocol, and includes an abort sequence requesting for abortion of the transmission data. The extended control sequence (25, 26, 52, 53, 55, 57) is undefined by the protocol and is provided for requesting an extended operation. The second communication unit (4, 5) receives the transmission data, the control sequence, and the extended control sequence, and executes the extended operation in response to the extended control sequence. The extended control sequence includes the abort sequence.

## Description

The present invention relates to a communication system and a communication method. More particularly, the present invention relates to a communication system for and a communication method of carrying out a communication in accordance with an extended protocol standard in which a certain protocol standard is extended.

A packet transmission is widely used in data communication systems.

PPP (Point-to-Point Protocol) provides a standard method for transporting packets. In PPP, a packet is usually mapped into a frame, and PPP defines a format of the frame. PPP specifies that the transmitter inserts a control code into a frame for requesting a receiver to execute a function. The control code is referred to as a control sequence. The receiver refers to the control sequence and then executes the specified function.

An abort sequence is one of the control sequences. The transmitter inserts an abort sequence into a frame to request the receiver to abort the frame. The receiver aborts the frame when detecting the abort sequence.

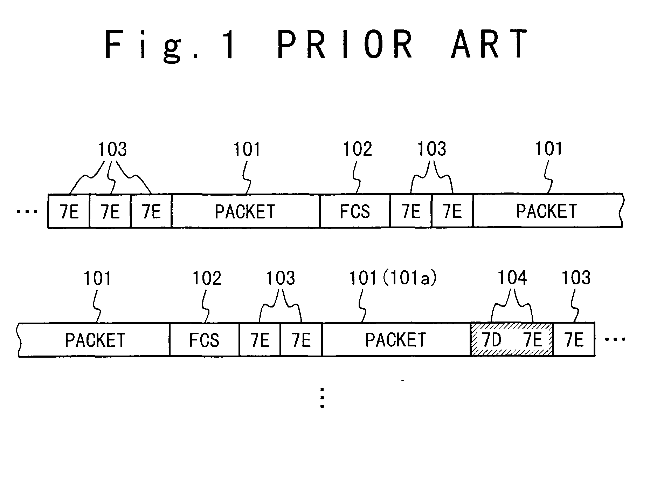

Fig. 1 shows a frame format of a packet transmission system based on PPP. Each of packets 101 is provided with an FCS (Frame Check Sequence) 102. The FCS holds a CRC (Cyclic Redundancy Check) code of the packet 101, which is used for an error correction.

Flag sequences 103 are filled between the packets 101. The flag sequences 103 is constituted by one byte, and has a value "7Eh" of in the hexadecimal notation. Here, "h" is a symbol indicative of a representation based on the hexadecimal number. The flag sequence 103 indicates the separation position between the two packets 101.

An abort sequence 104 is added to a packet 101a when the transmitter requests the receiver to abort the packet 101a. The receiver aborts the packet 101a when detecting the abort sequence 104.

PPP defines other control sequences besides the abort sequence.

However, a function undefined by the PPP is often desired to be executed in the packet transmission system. Therefore, extended control sequences are often defined for executing the undefined function. Hereinafter, a protocol defining a control sequence undefined by the PPP in addition to the control sequences defined by the PPP is referred to as an extended PPP.

For example, a control sequence for a function of transiently stopping a frame transmission is not defined by PPP. The transiently stopping is useful in adjusting a transmission speed of a frame. Therefore, an extended PPP is widely used in which an extended control sequence is defined for providing a function of transiently stopping a frame.

An interface apparatus operating on an extended PPP is commercially available. An advanced data sheet for the interface apparatus is published by Lucent Technologies in August 1999, entitled "TDAT042G5 SONET/SDH 155/622/2488 Mbits/s Data Interface". The advanced data sheet discloses an extended PPP on page 67.

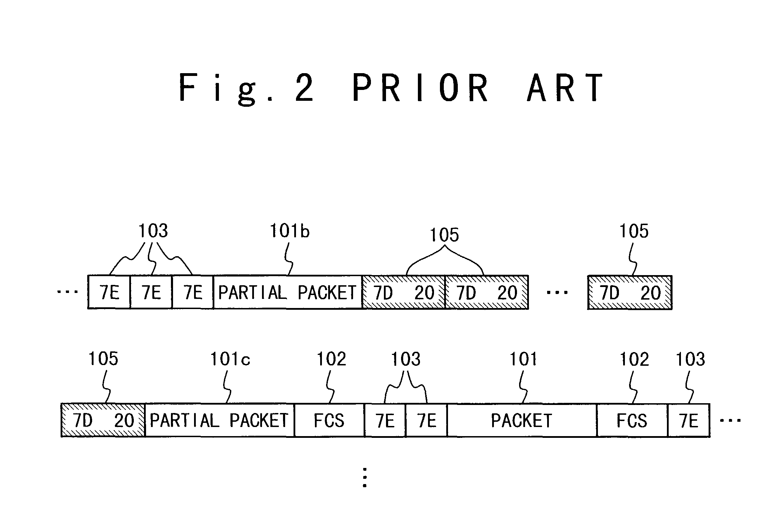

Fig. 2 shows a frame format based on the extended PPP. The transmitter operating on the extended PPP divides one packet into a plurality of partial packets 101b and 101c and transmits them. Invalid sequences 105, indicative of a transient stop of a frame transmission, are filled between the partial packets 101b, and 101c.

The invalid sequences 105 are constituted by two bytes, and have a value of "7Dh, 20h". The invalid sequence is not defined by PPP.

The receiver operating on the extended PPP refers to the invalid sequence 105, and recognizes that the partial packets 101b, and 101c are the components of a single packet. The receiver reproduces the single packet from the partial packets 101b, and 101c.

However, the conventional packet transmission system has the following problem. In the packet transmission system, communications are carried out between unspecific transmitters and receivers. Thus, a receiver not operating on the extended PPP but on the original PPP may be used on the receiving side. The receiver may erroneously recognize the invalid sequences included in the received frame as a data to be received. This may result in that the receiver receives wrong data. That is, this may bring about the erroneous reception.

It is desirable to attain a communication apparatus for and a communication method of transmitting a signal in accordance with an extended standard in which a certain standard is extended, wherein if a receiver complying with the extended standard receives the signal, a function is attained correspondingly to the extended standard, and wherein even if the signal is received by a receiver complying with only an original standard, the communication apparatus and the communication method do not bring about an erroneous reception.

Therefore, an object of the present invention is to provide a communication apparatus for and a communication method of transmitting a signal in accordance with an extended standard in which a certain standard is extended, wherein if a receiver complying with the extended standard receives the signal, a function defined by the extended standard is attained, and wherein even if the signal is received by a receiver complying with only an original standard, the communication apparatus and the communication method do not bring about an erroneous reception.

Another object of the present invention is to provide a communication apparatus for and a communication method of transmitting a signal in accordance with an extended standard in which PPP is extended, wherein if a receiver complying with the extended standard receives the signal, a function is attained correspondingly to the extended standard, and wherein even if the signal is received by a receiver complying with only an original PPP standard, the communication apparatus and the communication method do not bring about an erroneous reception.

Still another object of the present invention is to provide a communication apparatus for and a communication method of transmitting a signal in accordance with an extended standard in which PPP is extended and a transient stop function of a packet transmission is carried out, wherein if a receiver complying with the extended standard receives the signal, the transient stop function of the packet transmission is carried out, and wherein even if the signal is received by a receiver complying with only the PPP, the communication apparatus and the communication method do not bring about an erroneous reception.

Still another object of the present invention is to provide a communication apparatus for and a communication method of transmitting a signal in accordance with an extended standard in which PPP is extended and a transient stop function of a packet transmission is carried out when a transmission FIFO included in a transmitter becomes at an underflow state, wherein if a receiver complying with the extended standard receives the signal, the transient stop function of the packet transmission is carried out, and wherein even if the signal is received by a receiver complying with only the PPP, the communication apparatus and the communication method do not bring about an erroneous reception.

Still another object of the present invention is to provide a communication apparatus for and a communication method of transmitting a signal in accordance with an extended standard in which PPP is extended and a transmission speed of a transmitter is reduced when a reception FIFO included in a receiver has a fear of an overflow state, wherein if a receiver complying with the extended standard receives the signal, the function of reducing the transmission speed is carried out, and wherein even if the signal is received by a receiver complying with only the PPP, the communication apparatus and the communication method do not bring about an erroneous reception.

In order to achieve an aspect of the present invention, a communication system is composed of first and second communication units. The first communication unit sends transmission data, a control sequence, and an extended control sequence. The control sequence is originally defined by a protocol and includes an abort sequence requesting for abortion of the transmission data. The extended control sequence is undefined by the protocol and is provided for requesting an extended operation. The second communication unit receives the transmission data, the control sequence, and the extended control sequence. The second communication unit executes the extended operation in response to the extended control sequence. The extended control sequence includes the abort sequence.

The protocol may be PPP (Point-to-Point Protocol), and the abort sequence may be represented by "7D, 7E" in the hexadecimal notation.

Preferably, the extended control sequence consists of a plurality of the abort sequence.

The first communicating unit may divide the transmission data into a plurality of divided data, and sequentially transmits the plurality of divided data to the second communication unit. In this case, the second communicating system preferably reproduces the transmission data from the plurality of divided data in response to the extended control sequence.

The first communication unit may include a transmission high order layer, a transmission FIFO, a transmission data processor. In this case, the transmission high order layer generates the transmission data. The transmission FIFO transiently stores the transmission data, and sequentially outputs the transmission data. The transmission data processor reads the transmission data out of the transmission FIFO to transmit the transmission data to the second communication unit. The transmission data processor divides the transmission data into a plurality of divided data when an underflow occurs in the transmission FIFO, and sequentially transmits the plurality of divided data to the second communication unit. The second communication unit reproduces the transmission data from the plurality of divided data in response to the extended control sequence.

The first communication unit may include a CRC indicating unit, and a CRC calculator. In this case, the CRC indicating unit outputs a CRC indication sequence as the extended control sequence for indicating a CRC (Cyclic Redundancy Check) method. The CRC calculator calculates a CRC code according to the CRC method and outputs the CRC code to the second communication unit. The second communication unit executes a CRC on the transmission data in response to the CRC indication sequence based on the CRC code according to the CRC method.

The first communication unit may include an operation test indicating unit outputting an operation test indicating sequence as the extended control sequence, and outputting test data. In this case, the second communication unit preferably executes an operation test based on the test data in response to the operation test indicating sequence.

The second communication unit may send a predetermined signal to the first communication unit in response to the extended control sequence.

In order to achieve another aspect of the present invention, a communication system is composed of first and second communication units. The first communication unit transmits first transmission data. The second communication unit receives the first transmission data, and transmits second transmission data, a control sequence, and an extended control sequence to the first communication unit. The control sequence is originally defined by a protocol, and includes an abort sequence requesting for abortion of the second transmission data. The extended control sequence is undefined by the protocol and includes the abort sequence. The first communication unit adjusts a rate of transmitting the first transmission data in response to the extended control sequence.

The second communication unit may include a reception FIFO. The reception FIFO receives and stores the first transmission data. The extended control sequence is generated in accordance with a state of the reception FIFO.

The first communication unit may divide the first transmission data into a plurality of divided data, and transmit the plurality of divided data and another extended control sequence to the second communication unit. In this case, the second communicating system preferably reproduces the first transmission data from the plurality of divided data in response to the another extended control sequence.

In order to achieve still another aspect of the present invention, a transmitter is composed of a data receiver and a sending unit. The data receiver receives a transmission data. The sending unit sends the transmission data, a control sequence and an extended control sequence. The control sequence is originally defined by a protocol, and includes an abort sequence requesting for abortion of the transmission data. The extended control sequence is undefined by the protocol and is provided for requesting an extended operation.

In order to achieve still another aspect of the present invention, a receiver is composed of a receiving unit, and an outputting unit. The receiving unit receives a transmission data, a control sequence, and an extended control sequence. The control sequence is originally defined by a protocol, and includes an abort sequence requesting for abortion of the transmission data. The extended control sequence is undefined by the protocol and is provided for requesting an extended operation. The outputting unit outputs the received transmission data. The receiving unit executes the extended operation in response to the extended control sequence, and the extended control sequence includes the abort sequence.

In order to achieve still another aspect of the present invention, a communication method comprising:
sending transmission data;
sending a control sequence originally defined by a protocol wherein the control sequence includes an abort sequence requesting for abortion of the transmission data;
sending an extended control sequence, which is undefined by the protocol and is provided for requesting an extended operation;
receiving the transmission data, the control sequence, and the extended control sequence; and
executing the extended operation in response to the extended control sequence. The extended control sequence includes the abort sequence.

Fig. 1 shows a signal format of a signal in accordance with PPP;
Fig. 2 shows a signal format of a signal used in a conventional communication system;
Fig. 3 shows a configuration of a communication system of a first embodiment according to the present invention;
Fig. 4 shows a configuration of a PPP frame signal 7a;
Fig. 5 shows a configuration of a PPP frame signal 7a into which an abort sequence 24 is inserted;
Fig. 6 shows a configuration of a PPP frame signal 7a into which a transient stop sequence 25 and a packet completion sequence 26 are inserted;
Fig. 7 shows another configuration of the PPP frame signal 7a into which the transient stop sequence 25 and the packet completion sequence 26 are inserted;
Fig. 8 shows still another configuration of the PPP frame signal 7a into which the transient stop sequence 25 and the packet completion sequence 26 are inserted;
Fig. 9 shows a configuration of a communication system of a second embodiment according to the present invention;
Fig. 10 shows a content of a PPP frame signal 37a₁ into which a speed adjustment packet 51 and a speed adjustment sequence 52 are inserted;
Fig. 11 shows a content of a PPP frame signal 37a₁ into which an extension function check sequence is inserted;
Fig. 12 shows a configuration of a communication system of a third embodiment according to the present invention;
Fig. 13 shows a content of a PPP frame signal 7a into which an FCS control packet 54 and a FCS control sequence 55 are inserted;
Fig. 14 shows a configuration of a communication system of a fourth embodiment according to the present invention; and
Fig. 15 shows a configuration of a PPP frame signal 7a into which a test packet 55 and a test sequence 56 are inserted.

A communication system according to the present invention will be described below with reference to the attached drawings.

### First Embodiment

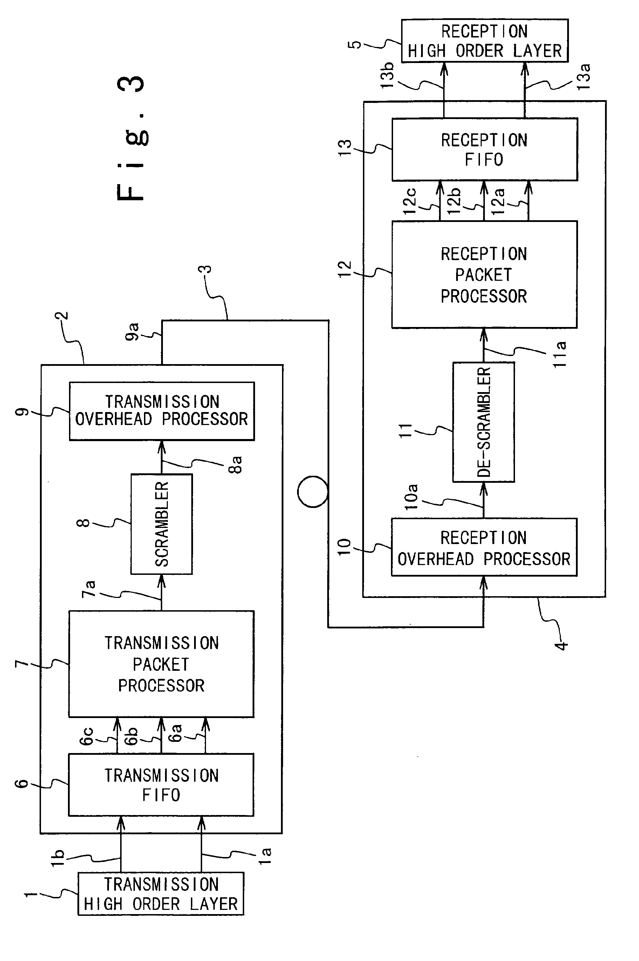

Fig. 3 shows a communication system in a first embodiment of the present invention. The communication system in the first embodiment is provided with a transmission high order layer 1, a transmission framer 2, a transmission path 3, a reception framer 4 and a reception high order layer 5.

The transmission high order layer 1 provides packets to be transmitted. The transmission high order layer 1 transmits the packets to the transmission framer 2 on a transmission packet signal 1a. Moreover, the transmission high order layer 1, if aborting the transmission of the packets, transmits an abort indication signal 1b indicative of the abort of the packet transmission, to the transmission framer 2.

The transmission framer 2 is composed of a transmission FIFO 6, a transmission packet processor 7, a scrambler 8 and a transmission overhead processor 9.

The transmission FIFO 6 transiently accumulates the packet transmitted from the transmission high order layer 1. The transmission FIFO 6 outputs the accumulated packet to the transmission packet processor 7 on a transmission packet signal 6a, in the input order.

Moreover, the abort indication signal 1b is inputted to the transmission FIFO 6 from the transmission high order layer 1. The transmission FIFO 6 outputs an abort indication signal 6b indicative of an abort of the packet transmission to the transmission packet processor 7 when receiving the abort indication signal 1b.

Moreover, the transmission FIFO 6 outputs an underflow occurrence signal 6c when an underflow occurs therein. The transmission FIFO 6 may be at the underflow state if a speed at which the packets are inputted to the transmission FIFO 6 is smaller than a speed at which the packets are outputted from the transmission FIFO 6. In such a case, the transmission FIFO 6 outputs the underflow occurrence signal 6c indicative of the occurrence of the underflow to the transmission packet processor 7.

The transmission packet processor 7 reads out the packets from the transmission FIFO 6, one byte at a time, at a predetermined timing. The transmission packet processor 7 adds FCS's, flag sequences and control sequences to the read packets to generate a PPP frame signal 7a.

In detail, the transmission packet processor 7 calculates CRC codes of the packets, and generates the FCS's for holding the CRC codes, and then adds to the packets.

Furthermore, the transmission packet processor 7 inserts flag sequences between the packets. The flag sequences are filled between the two packets, and indicate a separation between two packets. The flag sequences have a value of "7Eh" in the hexadecimal notation.

The transmission packet processor 7 inserts an abort sequence into the PPP frame signal 7a, if the abort of the packet is indicated by the abort indication signal 6b. The abort sequence is the control sequence defined by the PPP, as mentioned above. The abort sequence is a code of two bytes, and its value is 7Dh, 7Eh.

Moreover, the transmission packet processor 7 inserts a transient stop sequence and a packet completion sequence into the PPP frame signal 7a, if the underflow occurs in the transmission FIFO 6. Here, the transient stop sequence is a code of four bytes, and its value is 7Dh, 7Eh, 7Dh and 7Eh in which the abort sequence is repeated twice. The packet completion sequence is a code of six bytes, and its value is 7Dh, 7Eh, 7Dh, 7Eh, 7Dh, and 7Eh in which the abort sequence is repeated three times.

If the underflow occurs in the transmission FIFO 6, the input of the packet to the transmission packet processor 7 is transiently stopped. The input of the packet to the transmission packet processor 7 is resumed after the escape of the transmission FIFO 6 from the underflow state. That is, the packet is divided into a plurality of portions and inputted to the transmission packet processor 7. In this description, the plurality of portions generated by the division of the packet are referred to as partial packets, respectively. The transmission packet processor 7 inserts the transient stop sequence into a portion immediately after the partial packet, if the input of the packet is stopped. Moreover, the transmission packet processor 7 inserts the packet completion sequence into a portion immediately after the finally partial packet required to constitute the packet.

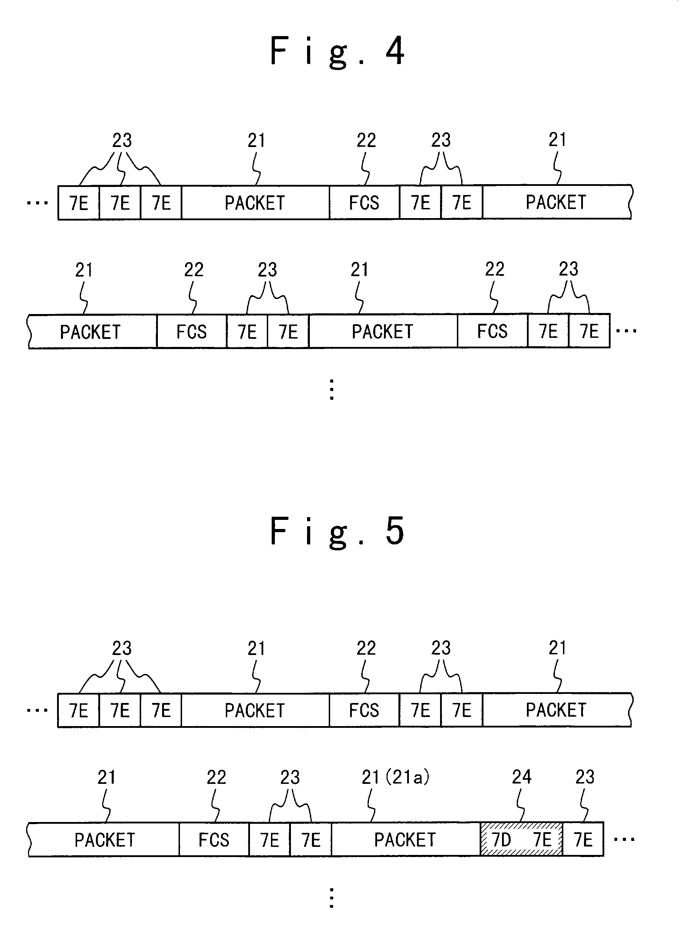

Fig. 4 shows the content of the PPP frame signal 7a generated by the transmission packet processor 7. Fig. 4 shows the content of the PPP frame signal 7a if the abort of the packet is not indicated and the underflow does not occur in the transmission FIFO 6. The PPP frame signal 7a includes a packet 21. The packet 21 is the packet read from the transmission FIFO 6. An FCS 22 is added to the final portion of the packet 21. A CRC code of the packet 21 is recorded in the FCS 22. Flag sequences 23 are filled between the packets 21.

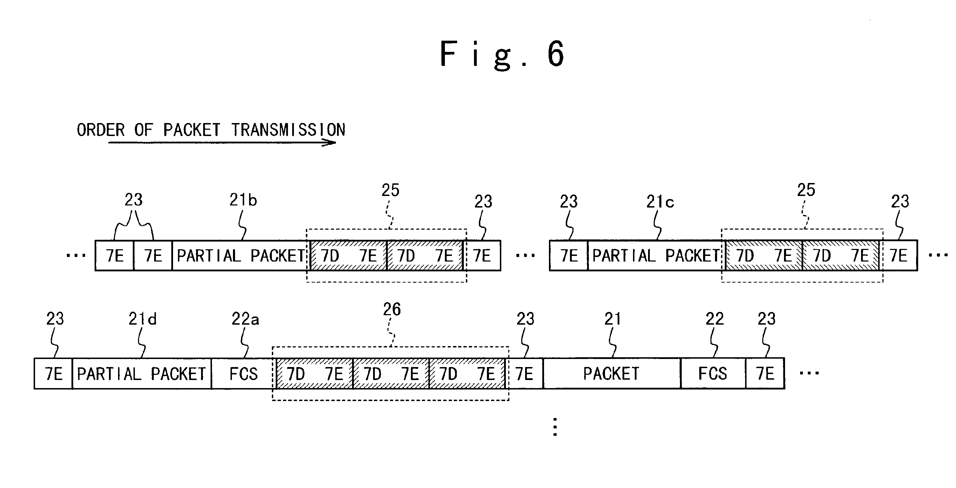

On the other hand, Fig. 5 shows the content of the PPP frame signal 7a if the abort of the packet is indicated by the abort indication signal 6b. As shown in Fig. 5, an abort sequence 24 is added to a rear portion of a packet 21a to be aborted.

Moreover, Fig. 6 shows the content of the PPP frame signal 7a if the underflow occurs in the transmission FIFO 6. Fig. 6 shows the content of the PPP frame signal 7a if one packet is divided into a plurality of partial packets 21b, 21c and 21d and inputted to the transmission packet processor 7.

The transmission packet processor 7 inserts a transient stop sequence 25 into a portion immediately after the partial packets 21b when the underflow occurs in the transmission FIFO 6. The transient stop sequence 25 shows that the transmission of the packet constituted by the plurality of partial packets 21b, 21c and 21d is transiently stopped. The reception framer 4 recognizes that the partial packet 21b is a part of one packet and that the remaining portions are sent after that, from the transient stop sequence 25.

Similarly, the transmission packet processor 7 also inserts another transient stop sequence 25 into a portion immediately after the partial packet 21c if the underflow occurs in the transmission FIFO 6 when the partial packet 21c is inputted to the transmission packet processor 7.

The transmission packet processor 7 inserts an FCS 22a into a portion immediately after the final partial packet 21d. The FCS 22a records therein a CRC code of one packet constituted by the plurality of partial packets 21b, 21c and 21d.

Moreover, the transmission packet processor 7 inserts a packet completion sequence 26 into a portion immediately after the FCS 22a. The packet completion sequence 26 shows that the plurality of partial packets 21b, 21c and 21d are all transmitted. The reception framer 4 recognizes that the partial packet 21d is the final partial packet of the packet that is divided and transmitted, from the packet completion sequence 26.

Both of the transient stop sequence 25 and the packet completion sequence 26 are the control sequences undefined by the PPP. However, both of them include "7Dh, 7Eh" implying the abort sequence. As described later, the fact that both of the transient stop sequence 25 and the packet completion sequence 26 include the "7Dh, 7Eh" implying the abort sequence provides the effect that even if a signal having the transient stop sequence 25 and the packet completion sequence 26 is sent to a reception framer which does not expect the reception of the transient stop sequence 25 and the packet completion sequence 26, an erroneous reception is never induced only if the reception framer aborts the received partial packet.

As mentioned above, the transmission packet processor 7 generates the PPP frame signal 7a while inserting the transient stop sequence 25 or the packet completion sequence 26 into the portion immediately after each of the partial packets constituting the packet, if the underflow occurs in the transmission FIFO 6.

The PPP frame signal 7a, generated by the transmission packet processor 7, is outputted to the scrambler 8. The scrambler 8 performs a scramble process on the PPP frame signal 7a and generates a scramble signal 8a. The scrambler 8 outputs the scramble signal 8a to the transmission overhead processor 9.

The transmission overhead processor 9 adds an overhead to the scramble signal 8a and generates a SONET/SDH frame 9a. The SONET/SDH frame 9a has a form defined by a SONET/SDH (Synchronous Optical Network/Synchronous Digital Hierarchy) standard. The overhead is a code to control an optical communication defined by the SONET/SDH standard. The transmission overhead processor 9 outputs the SONET/SDH frame 9a through the transmission path 3 to the reception framer 4.

The reception framer 4 is the reception framer for carrying out the operations corresponding to the transient stop sequence 25 and the packet completion sequence 26 that are the control sequences undefined by the PPP. The reception framer 4 has a reception overhead processor 10, a de-scrambler 11, a reception packet processor 12 and a reception FIFO 13.

The reception overhead processor 10 removes the overhead from the SONET/SDH frame 9a transmitted through the transmission path 3, and then reproduces a scramble signal 10a substantially equal to the scramble signal 8a.

The de-scrambler 11 performs the scramble process on the scramble signal 10a, and reproduces a PPP frame signal 11a substantially equal to the PPP frame signal 7a.

The reception packet processor 12 reproduces the packet from the PPP frame signal 11a, and outputs to the reception FIFO 13 by using a reception packet signal 12a.

The reception packet processor 12 reproduces the packet as follows.

If the PPP frame signal 11a does not transmit the packet, the PPP frame signal 11a has a value 7Eh implying the flag sequence. The reception packet processor 12 detects that the sequentially input PPP frame signal 11a has another value which is not 7Eh implying the flag sequence, and accordingly recognizes the start of the input of the packet.

Moreover, the reception packet processor 12 detects that the PPP frame signal 11a again returns to the value 7Eh implying the flag sequence, and thereby recognizes that the packets are inputted to the end. The reception packet processor 12 fetches the packets from the PPP frame signal 11a and outputs to the reception FIFO 13. The reception FIFO 13 outputs the packets to the reception high order layer 5 in turn.

At this time, the reception packet processor 12 judges the two bytes immediately before the flag sequence as FCS, and then judges whether or not the packet is normally transmitted, in accordance with the CRC code included in the FCS.

If it is judged that the packet is not normally transmitted, the reception packet processor 12 outputs an error packet report signal 12b indicative of an abort of the packet to the reception FIFO 13. The reception FIFO 13 receiving the error packet report signal 12b outputs a packet abort signal 13b indicative of the abort of the packet to the reception high order layer 5. The reception high order layer 5 aborts the received packet in accordance with the packet abort signal 13b.

The reception packet processor 12, even if the abort sequence is included in the PPP frame signal 11a, outputs the error packet report signal 12b to the reception FIFO 13, and commands to abort the packet.

Moreover, the reception packet processor 12, if detecting the transient stop sequence from the PPP frame signal 11a, recognizes that the received packet is constituted by a plurality of partial packets and its transmission is transiently stopped.

If detecting the transient stop sequence, the reception packet processor 12 does not judge that the packets are inputted to the end, even if detecting the flag sequence in succession after the transient stop sequence. Thus, the calculation of the FCS is not carried out.

At this time, the reception packet processor 12 outputs the input partial packets to the reception FIFO 13 in turn. Moreover, the reception packet processor 12 outputs an EOP hold indication signal 12c to the reception FIFO 13. Usually, the reception packet processor 12 sequentially transfers the data of a packet to high order layers, and sends a report of EOP (End Of Packet) to the high order layers after the output of the final data of the packet. However, the EOP must not be outputted in receiving a non-final partial packet. Therefore, the reception packet processor 12 outputs to the reception FIFO 13 the EOP hold indication signal 12c intended so as not to output the EOP in the non-final partial packet, as for the divided packets. Since the EOP hold indication signal 12c is outputted to the reception FIFO 13, the EOP is reported with regard to only the final partial packet.

In succession, the reception packet processor 12 detecting the transient stop sequence monitors whether or not the PPP frame signal 11a includes the packet completion sequence. The detection of the packet completion sequence enables the reception packet processor 12 to recognize the completion of the input of the final partial packet among the plurality of partial packets into which the packet is divided. The reception packet processor 12 detecting the packet completion sequence judges the two bits immediately before the packet completion sequence as the FCS, and then judges whether or not the packet is normally transmitted.

If it is judged that the packet is not normally transmitted, the reception packet processor 12 outputs to the reception FIFO 13 the error packet report signal 12b indicative of the abort of the packet.

Moreover, the reception packet processor 12, if detecting the packet completion sequence, stops the output of the EOP hold indication signal 12c, and allows the reception FIFO 13 to output the packet to the reception high order layer 5.

The reception FIFO 13 transfers in turn the packets received from the reception packet processor 12, to the reception high order layer 5. Moreover, the reception FIFO 13 responds to the error packet report signal 12b, and outputs to the reception high order layer 5 the packet abort signal 13b indicative of the abort of the packet.

The reception high order layer 5 receives the packet from the reception FIFO 13. Moreover, the reception high order layer 5 aborts the received packet in accordance with the packet abort signal 13b.

As mentioned above, the transmission framer 2, if the transmission FIFO 6 included therein becomes at the underflow state, uses the transient stop sequence and the packet completion sequence, and transmits the packet while carrying out the transient stop. The reception framer 4 refers to the transient stop sequence and the packet completion sequence, and normally receives the packet transmitted while it is transiently stopped. In the communication system of this embodiment, the packet can be normally transmitted and received even if the transmission FIFO 6 becomes at the underflow state. Thus, in the communication system of this embodiment, it is not necessary to abort the packet even if the transmission FIFO 6 becomes at the underflow state. That is, even if the transmission FIFO 6 becomes at the underflow state, the transmission high order layer 1 need not re-transmit the packet. Hence, in the communication system of this embodiment, there is no case that the transmission efficiency is dropped because of the re-transmission of the packet since the transmission FIFO 6 becomes at the underflow state.

Here, let us consider the case that the transmission framer 2 in this embodiment is connected to a reception framer which does not comply with the transient stop sequence and the packet completion sequence although it complies with the PPP. Even in this case, there is no case that the reception framer receives the erroneous data and then transfers to the reception high order layer. This is because both of the transient stop sequence and the packet completion sequence include the 7Dh, 7Eh implying the abort sequence. The reception framer, which does not expect the reception of the transient stop sequence and the packet completion sequence, recognizes the transient stop sequence and the packet completion sequence as the abort sequence, and merely aborts the transmitted packet. Thus, there is no case that the reception framer that does not comply with the transient stop sequence and the packet completion sequence receives the erroneous data.

In this embodiment, the transient stop sequence and the packet completion sequence may have other values if they can satisfy the following three conditions.
(1) They include the abort sequence 7Dh, 7Eh.
(2) They do not include the control sequence defined by the PPP.
(3) The transient stop sequence and the packet completion sequence are different from each other.

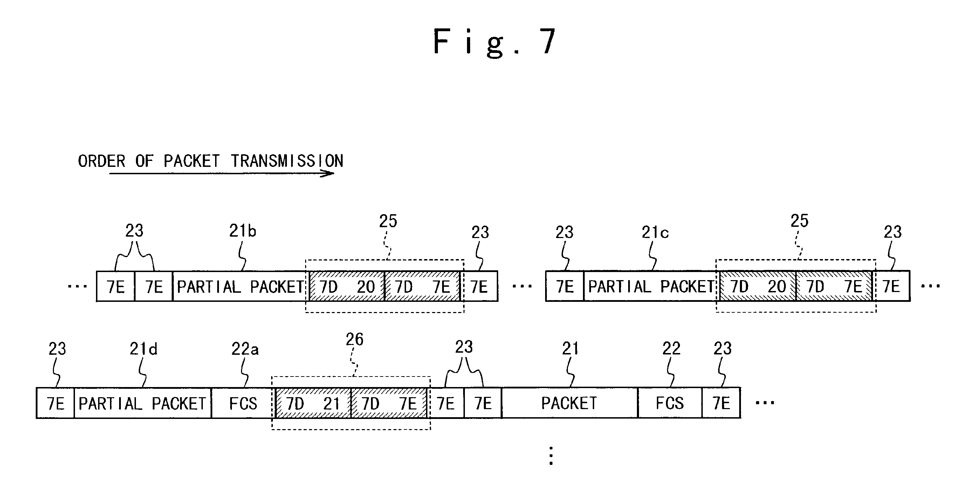

For example, as shown in Fig. 7, the transient stop sequence can have "7Dh, 20h, 7Dh, 7Eh", and the packet completion sequence can have "7Dh, 21h, 7Dh, 7Eh".

However, as described in the explanation of this embodiment, both of the transient stop sequence and the packet completion sequence are the repetitions of the abort sequence "7Dh, 7Eh". So, it is desired that the numbers of respective repetitions are different from each other. This reason is as follows. That is, it is understood that the abort sequence "7Dh, 7Eh" always indicates the abort process in the case of the packet communication system complying with the PPP. Thus, at least an erroneous reception is never induced in the case of the packet communication system complying with the PPP.

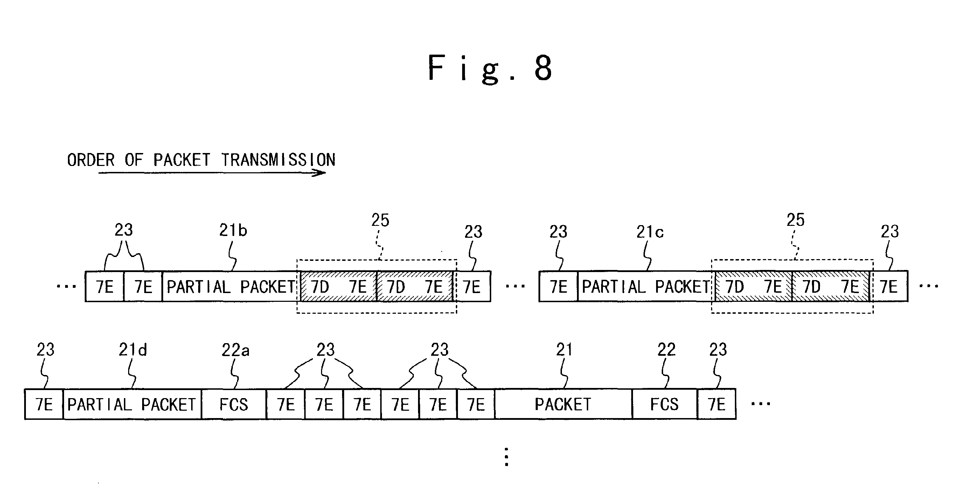

Also, in this embodiment, it is possible that the packet completion sequence is not added to a portion behind the finally transmitted partial packet 21d among the partial packets 21b, 21c and 21d constituting one packet, as shown in Fig. 8. In this case, the reception packet processor 12 recognizes that the partial packet 21d is the finally transmitted partial packet among the partial packets 21b, 21c and 21d constituting the one packet, since the transient stop sequence is not added to the portion behind the partial packet 21d. A signal to be transmitted can be reduced since the packet completion sequence is not added.

On the other hand, if a reception framer, which does not comply with the transient stop sequence although it complies with the PPP, receives a signal having a signal format shown in Fig. 8, the reception framer does not calculate an entire CRC code of the partial packets 21b, 21c and 21d constituting the one packet when calculating a CRC code, and it calculates a CRC code of only the partial packet 21d. The CRC code calculated on the basis of only the partial packet 21d does not typically agree with the CRC code calculated on the basis of the entire packet composed of the partial packets 21b, 21c and 21d. The CRC code calculated on the basis of only the partial packet 21d does not agree with the CRC code noted in the FCS. Thus, the data of the partial packet 21d is aborted because of an FCS error. In this way, even if the reception framer, which does not comply with the transient stop sequence although complying with the PPP, receives the signal having the format shown in Fig. 8, the erroneous reception is not usually induced.

However, if the CRC code of the partial packet 21d accidentally agrees with the CRC code noted in the FCS 22a although this probability is very low, the partial packet 21d is judged as a single packet. Thus, if a packet transmission system requiring high data reliability is established, it is desirable to add the packet completion sequence.

### Second Embodiment

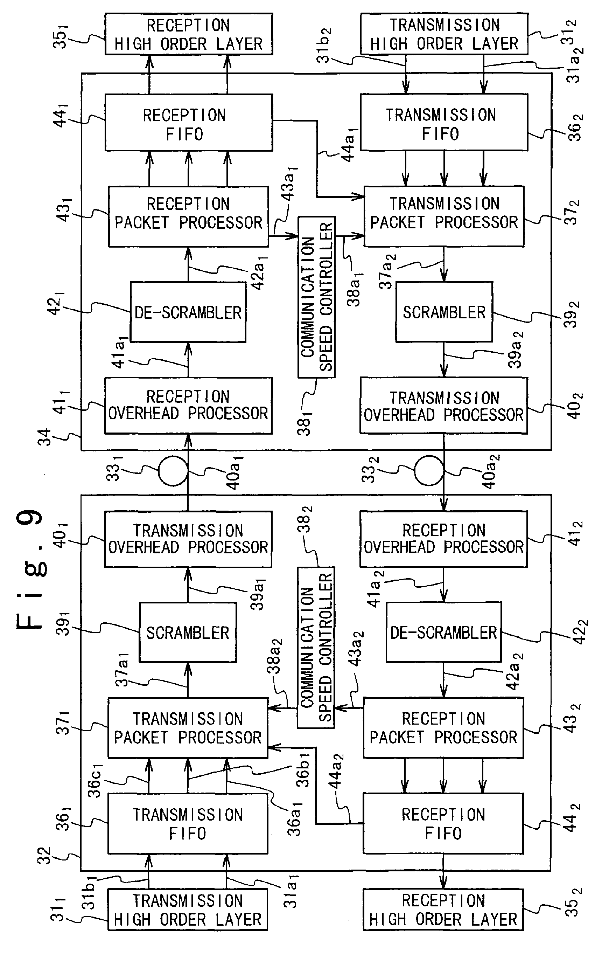

Fig. 9 shows a communication system in a second embodiment according to the present invention. The communication system in the second embodiment is provided with transmission high order layers 31₁, 31₂, a first framer 32, optical transmission paths 33₁, 33₂, a second framer 34 and reception high order layers 35₁, 35₂.

The first framer 32 is composed of a transmission FIFO 36₁, a transmission packet processor 37₁, a communication speed controller 38₁, a scrambler 39₁, a transmission overhead processor 40₁, a reception overhead processor 41₂, a de-scrambler 42₂, a reception packet processor 43₂ and a reception FIFO 44₂.

The second framer 34 is composed of a transmission FIFO 36₂, a transmission packet processor 37₂, a communication speed controller 38₂, a scrambler 39₂, a transmission overhead processor 40₂, a reception overhead processor 41₁, a de-scrambler 42₁, a reception packet processor 43₁ and a reception FIFO 44₁.

The communication system in this embodiment is configured such that if the underflow occurs in the transmission FIFO 36₁ and the transmission FIFO 36₂, the packet can be normally transmitted and received. Moreover, the purpose of the communication system in this embodiment is to adjust the transmission speeds at which the transmission packet processors 37₁, 37₂ transmit the packet, and thereby protect the underflow from occurring in the reception FIFO 44₁, 44₂. The communication system in this embodiment will be described below.

Here, the operations of the transmission FIFO 36₂, the transmission packet processor 37₂, the communication speed controller 38₂, the scrambler 39₂, the transmission overhead processor 40₂, the reception overhead processor 41₂, the de-scrambler 42₂, the reception packet processor 43₂ and the reception FIFO 44₂ that are mounted on the route through which the packet is transmitted to the reception high order layer 35₂ from the transmission high order layer 31₂ are respectively equal to the operations of the transmission FIFO 36₁, the transmission packet processor 37₁, the communication speed controller 38₁, the scrambler 39₁, the transmission overhead processor 40₁, the reception overhead processor 41₁, the de-scrambler 42₁, the reception packet processor 43₁ and the reception FIFO 44₁ that are mounted on the route through which the packet is transmitted to the reception high order layer 35₁ from the transmission high order layer 31₁. Therefore, only the operations of the transmission FIFO 36₁, the transmission packet processor 37₁, the communication speed controller 38₁, the scrambler 39₁, the transmission overhead processor 40₁, the reception overhead processor 41₁, the de-scrambler 42₁, the reception packet processor 43₁ and the reception FIFO 44₁ that are mounted on the route through which the packet is transmitted to the reception high order layer 35₁ from the transmission high order layer 31₁ will be described below.

The operations of the transmission high order layer 31₁ and the transmission FIFO 36₁ are respectively equal to the operations of the transmission high order layer 1 and the transmission FIFO 36 in the first embodiment.

The transmission high order layer 31₁ generates a packet to be transmitted. The transmission high order layer 31₁ transmits the generated packet to the transmission FIFO 36₁ on a transmission packet signal 31a₁. Moreover, the transmission high order layer 31₁, if aborting the transmission in the course of the packet transmission, transmits an abort indication signal 31b₁ indicative of the abort of the packet transmission, to the transmission FIFO 36₁.

The transmission FIFO 36₁ transiently accumulates the packets transmitted from the transmission high order layer 31₁. The transmission FIFO 36₁ outputs the accumulated packets to the transmission packet processor 37₁ by using a transmission FIFO 36a₁, in the input order.

Moreover, the abort indication signal 31b₁ is respectively inputted to the transmission FIFO 36₁ from the transmission high order layer 31₁. The transmission FIFO 36₁, when receiving the abort indication signal 31b₁, outputs an abort indication signal 36b₁ indicative of an abort of the packet transmission to the transmission packet processor 37₁, respectively.

Moreover, the transmission FIFO 36₁ outputs, when the underflow occurs therein, outputs an underflow occurrence signal 36c₁ to the transmission packet processor 37₁.

The transmission packet processor 37₁ reads the packets from the transmission FIFO 36₁, one byte at a time, at a predetermined timing. The transmission packet processor 37₁ adds the FCS, the flag sequence and the control sequence to the read packet, and then generates a PPP frame signal 37a₁.

The transmission packet processor 37₁ calculates the CRC code of the packet read from the transmission FIFO 36₁, and generates the FCS for holding the CRC code, and then adds to the packet. The transmission packet processor 37₁ inserts the flag sequence between the packets. Moreover, the transmission packet processor 37₁ inserts the abort sequence into the PPP frame signal 37a₁, if the abort of the packet is indicated by the abort indication signal 36b₁.

Moreover, the transmission packet processor 37₁ inserts the above-mentioned transient stop sequence and the packet completion sequence into the PPP frame signal 37a₁, if the underflow occurs in the transmission FIFO 36₁.

The above-described operations of the transmission packet processor 37₁ are same as that of the transmission packet processor 7 contained by the communication system in the first embodiment, and the detailed explanation is omitted.

In addition to the above-mentioned operations, the transmission packet processor 37₁ monitors a remaining amount of a memory region of the reception FIFO 44₂, and inserts a speed adjustment packet and a speed adjustment sequence into the PPP frame signal 37a₁, in response to the remaining amount.

The reception FIFO 44₂ outputs the remaining amount of the memory region of the reception FIFO 44₂ to the transmission packet processor 37₁ on an overflow indication signal 44a₂. The transmission packet processor 37₁ generates a speed adjustment information with regard to a speed at which the second framer 34 transmits a packet, on the basis of the remaining amount. Then, the transmission packet processor 37₁ generates a speed adjustment packet including the speed adjustment information. That is, the transmission packet processor 37₁ inserts the speed adjustment packet and the speed adjustment sequence indicative of the transmission of the speed adjustment packet into the PPP frame signal 37a₁.

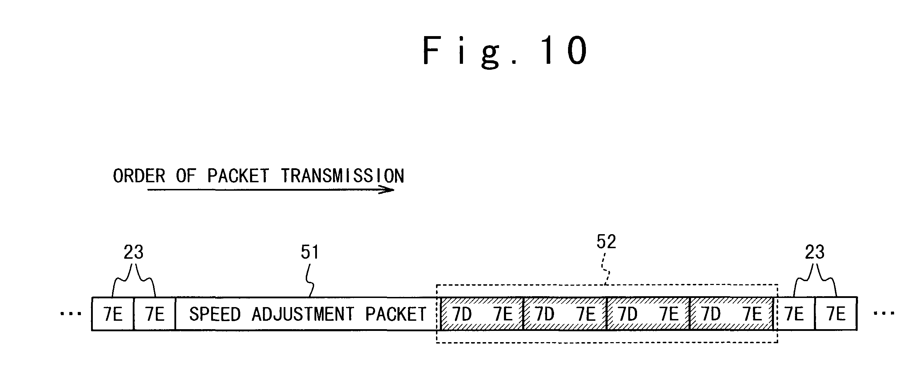

Fig. 10 shows a speed adjustment packet 51 and a speed adjustment sequence 52 that are included in the PPP frame signal 37a₁. As mentioned above, the speed adjustment packet 51 has the speed adjustment information. The speed adjustment sequence 52 is added to a portion immediately after the speed adjustment packet 51. The speed adjustment sequence 52 is a code of 8 bytes, and it is equal to that of the four repetitions of the abort sequence. The speed adjustment sequence 52 shows that the packet immediately before is the speed adjustment packet 51. As described later, the speed adjustment information included in the speed adjustment packet 51 is sent to the second framer 34. The second framer 34 adjusts a transmission speed of a packet to be transmitted to the first framer 32, on the basis of the speed adjustment information.

Here, the speed adjustment packet 51 and the speed adjustment sequence 52 are not always inserted between the packets to be transmitted. It is also possible to transiently stop the transmission of one packet, and then possible to insert the speed adjustment packet 51 and the speed adjustment sequence 52.

The transmission packet processor 37₁ for inserting the speed adjustment packet 51 and the speed adjustment sequence 52 further adjusts the transmission speed, in response to a transmission speed control signal 38a₂ outputted by the communication speed controller 38₂. Here, the transmission speed control signal 38a₂ is the signal for adjusting the transmission speed of the transmission packet processor 37₁. The generating process will be described later.

Actually, the transmission packet processor 37₁ divides one packet to be transmitted, into a plurality of partial packets, similarly to the first embodiment. The transmission packet processor 37₁, while inserting the transient stop sequence or the packet completion sequence into a portion immediately after the plurality of partial packets, transmits the PPP frame signal 37a₁. The plurality of partial packets are transmitted at a predetermined temporal interval. The transmission packet processor 37₁ adjusts the temporal interval to accordingly adjust an effective transmission speed.

The PPP frame signal 37a₁ generated by the above-mentioned processes in the transmission packet processor 37₁ is outputted to the scrambler 39₁. The operation of the scrambler 39₁ is similar to that of the scrambler 8 in the first embodiment. The scrambler 39₁ performs the scramble process on the PPP frame signal 37a₁, and generates a scramble signal 38a₁. The scrambler 39₁ outputs the scramble signal 39a₁ to the transmission overhead processor 39₁.

The transmission overhead processor 40₁ adds an overhead to the scramble signal 39a₁ and generates a SONET/SDH frame 40a₁. The transmission overhead processor 40₁ outputs the SONET/SDH frame 40a₁ through the transmission path 33₁ to the reception overhead processor 41₁ of the reception framer 34.

The reception overhead processor 41₁ removes the overhead from the SONET/SDH frame 40a₁ transmitted through the transmission path 33₁, and reproduces a scramble signal 41a₁ substantially equal to the scramble signal 39a₁.

The de-scrambler 42₁ performs the descramble process on the scramble signal 39a₁ substantially equal to the scramble signal 39a₁.

The reception packet processor 43₁, while referring to the transient stop sequence and the packet completion sequence, reproduces a packet from the PPP frame signal 42a₁ and outputs to the reception FIFO 44₁. The reception FIFO 44₁ transfers the reproduced packet to the reception high order layer 35₁. The process is similar to the operation of the reception packet processor 12 included in the communication system of the first embodiment, and the explanation is omitted.

Moreover, the reception packet processor 43₁ fetches the speed adjustment information from the speed adjustment packet generated by the transmission packet processor 37₁, and outputs to the transmission speed controller 38₁ by using a speed adjustment information signal 43a₁. The transmission speed controller 38₁, in accordance with the speed adjustment information fetched from the speed adjustment packet, generates a transmission speed control signal 38a₁, and adjusts a transmission speed of the transmission packet processor 37₂.

The communication system in this embodiment having the above-mentioned configuration protects the overflow from occurring in the reception FIFO 44₁, 44₂. The process for adjusting the transmission speed of the packet transmitted to the second framer 34 from the first framer 32 and accordingly protecting the overflow from occurring in the reception FIFO 44₁ will be described below.

The packet generated by the transmission high order layer 31₁ is transmitted to and accumulated in the reception FIFO 44₁ of the second framer 34, while its transmission speed is adjusted by the transmission packet processor 37₁. The remaining amount of the memory region of the reception FIFO 44₁ for accumulating the packet generated by the transmission high order layer 31₁ is sent to the transmission packet processor 37₂ by using an overflow indication signal 44a₁. The transmission packet processor 37₂, if judging that the remaining amount of the memory region of the reception FIFO 44₁ is small, generates a speed adjustment information having a content indicative of a command for making the transmission speed slower.

The transmission packet processor 37₂ transmits the speed adjustment sequence and the speed adjustment packet including the speed adjustment information to the reception packet processor 43₂ in the first framer 32. The reception packet processor 43₂ fetches the speed adjustment information from the received speed adjustment packet, and outputs to a transmission speed controller 38₂ by using a speed adjustment information signal 43a₂. The transmission speed controller 38₂, in accordance with this speed adjustment information, generates a transmission speed control signal 38a₂, and then reduces the transmission speed of the transmission packet processor 37₁. Thus, the transmission speed of the packet transmitted to the reception FIFO 44₂ is reduced to thereby protect the overflow from occurring in the reception FIFO 44₁.

The similar process protects the overflow from occurring in the reception FIFO 44₂.

As mentioned above, in the communication system in this embodiment, the adjustment of the transmission speed enables the overflow from occurring in the reception FIFO 44₁, 44₂.

Here, let us suppose that a signal including the speed adjustment packet and the speed adjustment sequence is sent to a framer that does not comply with the speed adjustment packet and the speed adjustment sequence although it complies with the PPP. As mentioned above, the speed adjustment sequence includes the abort sequence "7Dh, 7Eh". Thus, if the signal including the speed adjustment packet and the speed adjustment sequence is inputted to the framer that does not comply with the speed adjustment packet and the speed adjustment sequence, the framer aborts the speed adjustment packet and the speed adjustment sequence. Hence, the framer does not bring about the erroneous reception.

In the above mentioned communication system, in which packets are transferred between the two framers, one of the framers can check whether or not the other framer operates on the basis of the extended standard.

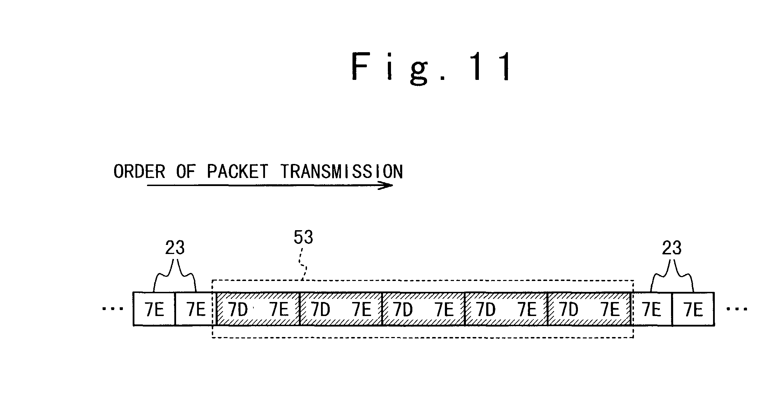

The transmission packet processor 37₁ of the first framer 32 inserts an extended standard check sequence into the PPP frame signal 37a₁ and transmits. Fig. 11 shows an extended standard check sequence 53 inserted into the PPP frame signal 37a1. The extended standard check sequence 53 is the control sequence in which the abort sequence "7Dh, 7Eh" is repeated five times, as shown in Fig. 11. The extended standard check sequence is transmitted to the second framer 34. The reception packet processor 43₁ of the second framer 34 recognizes the transmission of the extended standard check sequence. The reception packet processor 43₁ recognizing the transmission of the extended standard check sequence commands the transmission packet processor 37₂ to transmit the extended standard check sequence to the first framer 32.

In the extended standard check sequence transmitted by the transmission packet processor 37₂, the reception packet processor 43₂ of the first framer 32 recognizes the transmission of the extended standard check sequence. Since the reception packet processor 43₂ receives an extended standard sequence, the first framer 32 can check that the second framer 34 is the framer complying with the extended standard. In accordance with the similar processes, the second framer 34 can also check that the first framer 32 is the framer complying with the extended standard.

Here, let us suppose that a signal including the extended standard sequence is sent to a framer that does not comply with the extended standard sequence although it complies with the PPP. As mentioned above, the extended standard sequence includes the abort sequence "7Dh, 7Eh". Thus, if the signal including the extended standard sequence is inputted to the framer which does not comply with the extended standard sequence, the framer aborts the extended standard sequence. Hence, also, the framer does not bring about the erroneous reception.

In the second embodiment, the transient stop sequence, the packet completion sequence, the speed adjustment sequence and the extended standard check sequence may have other values if they can satisfy the following three conditions.
(1) They include the abort sequence 7Dh, 7Eh.
(2) They do not include the control sequence defined by the PPP.
(3) The transient stop sequence, the packet completion sequence, the speed adjustment sequence and the extended standard check sequence are different from each other.

### Third Embodiment

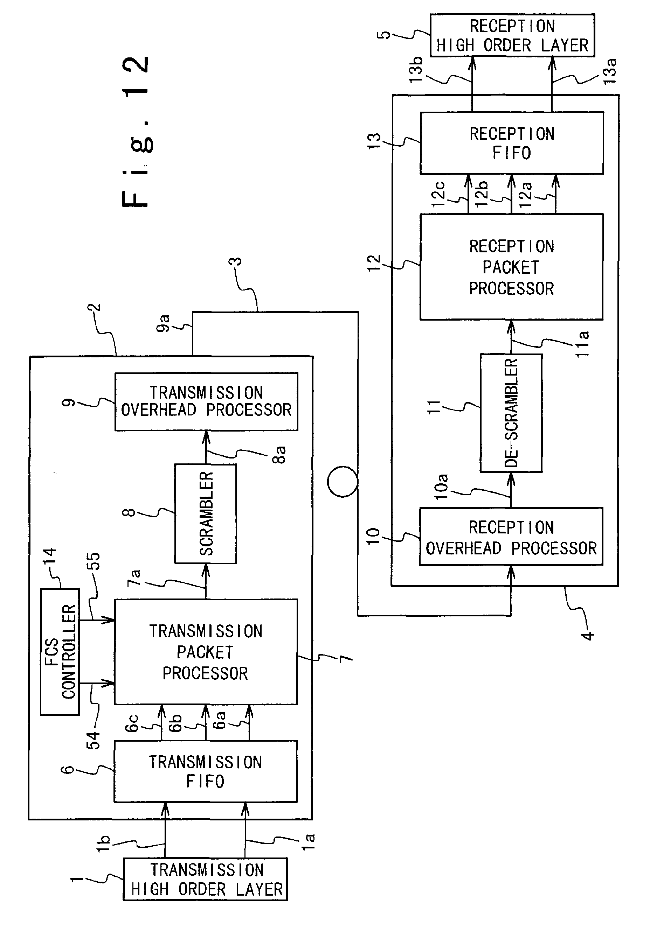

Fig. 12 shows a communication system in a third embodiment according to the present invention. The configuration of the communication system in this embodiment is substantially similar to that of the communication system in the first embodiment. The communication system in the third embodiment has the configuration in which an FCS controller 14 is added to the communication system in the first embodiment. Associated with the addition of the FCS controller 14, the operations of a transmission packet processor 7 and a reception packet processor 12 of the communication system in the third embodiment are different in the following points from those of the communication system in the first embodiment.

The FCS controller 14 outputs an FCS control signal 14a to the transmission packet processor 7. The transmission packet processor 7 changes a method of calculating an FCS to be inserted into the PPP frame signal 7a, in response to the FCS control signal 14a. Moreover, the transmission packet processor 7 inserts an FCS control packet indicative of the FCS calculation method, and an FCS control sequence into the PPP frame signal 7a.

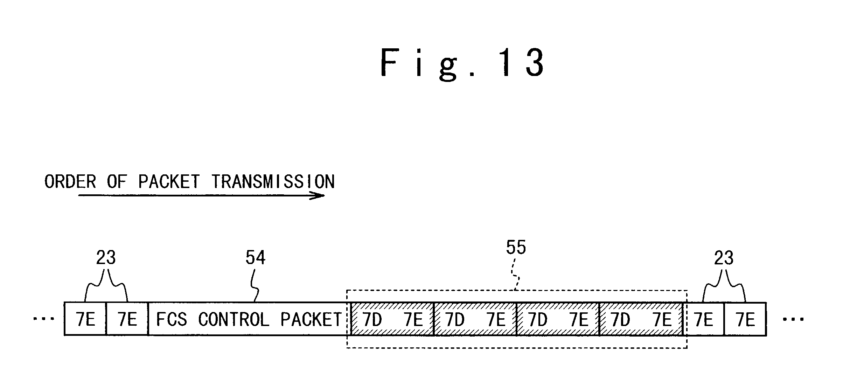

Fig. 13 shows an FCS control sequence 55 and an FCS control packet 54 that are inserted into the PPP frame signal 7a. The FCS control packet 54 is the packet indicative of the FCS calculation method. The FCS control sequence 55 is inserted into a portion immediately after the FCS control packet 54. The FCS control sequence 55 is the control sequence in which the abort sequences "7Dh, 7Eh" are repeated four times. The FCS control sequence 55 shows that the packet immediately before is the FCS control packet 54.

The FCS control sequence 55 and the FCS control packet 54 that are inserted into the PPP frame signal 7a are sent to the reception packet processor 12 of the reception framer 4. The reception packet processor 12 detects the FCS control sequence 55, and fetches the FCS control packet 54 received immediately before. The reception packet processor 12 changes the FCS calculation method for the FCS calculation method shown by the FCS control packet 54. The reception packet processor 12 calculates a CRC code of the packet received by it, in accordance with the changed FCS calculation method. Moreover, the reception packet processor 12 judges whether or not the packet is normally received, from the CRC code stored in the FCS added to the packet and the CRC code of the received packet.

As mentioned above, the communication system in this embodiment can change the FCS calculation method, which is the function undefined by the PPP.

Here, let us suppose that a signal including the FCS control packet and the FCS control sequence is sent to a framer that does not comply with the FCS control packet and the FCS control sequence although it complies with the PPP. As mentioned above, the FCS control sequence includes the abort sequence 7Dh, 7Eh. Thus, if the signal including the FCS control packet and the FCS control sequence is inputted to the framer which does not comply with the FCS control packet and the FCS control sequence, the framer aborts the FCS control packet and the FCS control sequence. Hence, the framer does not bring about the erroneous reception.

In the third embodiment, the FCS control sequence may have another value if it can satisfy the following three conditions.
(1) It includes the abort sequence 7Dh, 7Eh.
(2) It does not include the control sequence defined by the PPP.
(3) The transient stop sequence, the packet completion sequence and the FCS control sequence are different from each other.

### Fourth Embodiment

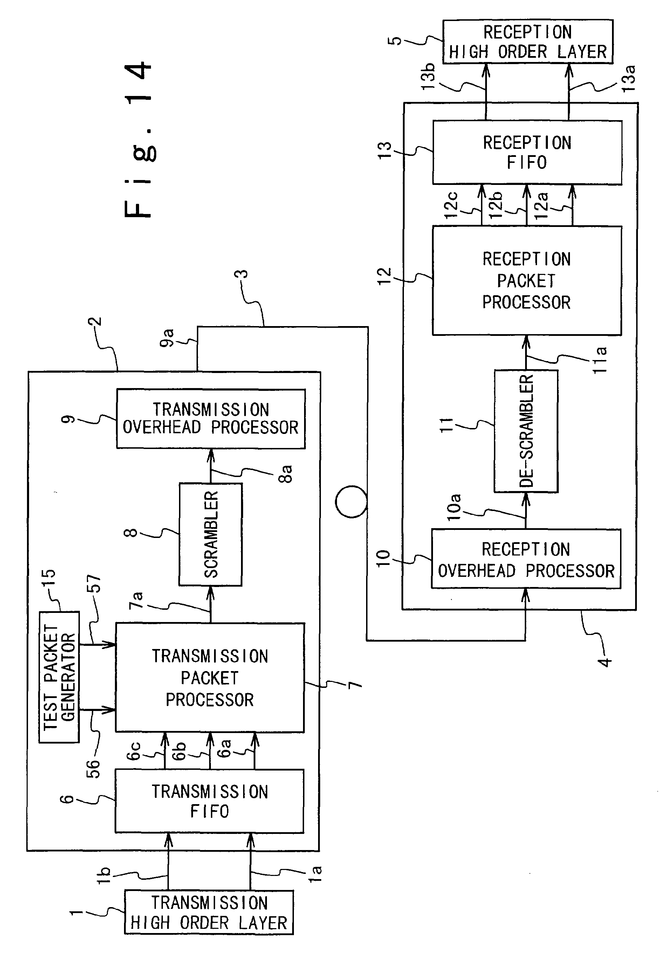

Fig. 14 shows a communication system in a fourth embodiment according to the present invention. The configuration of the communication system in this embodiment is substantially similar to that of the communication system in the first embodiment. The communication system in the fourth embodiment has the configuration in which a test packet generator 15 is added to the communication system in the first embodiment. Associated with the addition of the test packet generator 15, the operations of the transmission packet processor 7 and the reception packet processor 12 of the communication system in the fourth embodiment are different in the following points from those of the communication system in the first embodiment.

The test packet generator 15 generates a test packet and outputs the test packet to the transmission packet processor 7 by using a test packet signal 15a. The transmission packet processor 7 inserts the test packet included in the test packet signal 15a into the PPP frame signal 7a. Moreover, the transmission packet processor 7 inserts a test packet sequence into the PPP frame signal 7a, in a portion immediately after the test packet.

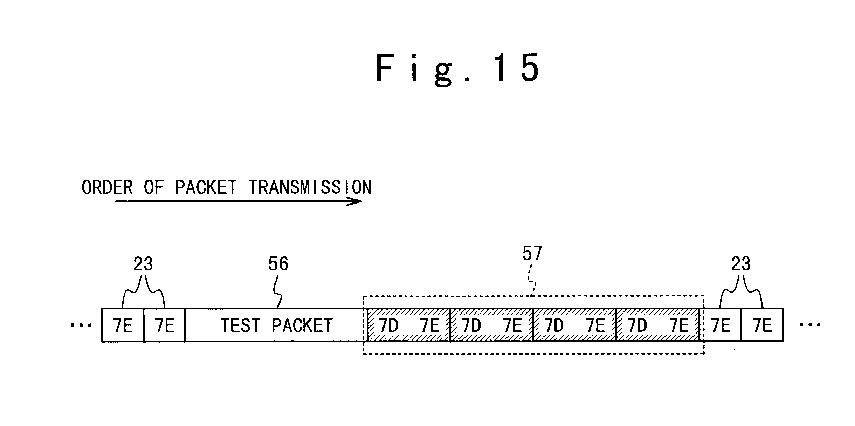

Fig. 15 shows a test packet 56 and a test sequence 57 that are inserted into the PPP frame signal 7a. The test sequence 57 is inserted into a portion immediately after the test packet 56. The test packet 56 is the control sequence in which the abort sequences "7Dh, 7Eh" are repeated four times. The test sequence 57 shows that the packet immediately before is the test packet 56.

The test packet 56 and the test sequence 57 that are inserted into the PPP frame signal 7a is transmitted to the reception packet processor 12 of the reception framer 4. The reception packet processor 12 detects the test sequence 57 and fetches the test packet 56 transmitted immediately before. The reception packet processor 12 carries out an operation test in accordance with the test packet 56.

As described above, the communication system in this embodiment can carry out the operation test of the reception packet processor 12, which is the function undefined by the PPP.

Here, let us suppose that a signal including the test packet and the test sequence is sent to a framer that does not comply with the test packet and the test sequence although it complies with the PPP. As mentioned above, the test sequence includes the abort sequence 7Dh, 7Eh. Thus, if the signal including the test packet and the test sequence is inputted to the framer that does not comply with the test packet and the test sequence, the framer aborts the test packet and the test sequence. Hence, the framer does not bring about the erroneous reception.

In the fourth embodiment, the test sequence may have another value if it can satisfy the following three conditions.
(1) It includes the abort sequence 7Dh, 7Eh.
(2) It does not include the control sequence defined by the PPP.
(3) The transient stop sequence, the packet completion sequence and the test sequence are different from each other.

The present invention provides a communication apparatus for and a communication method of transmitting a signal in accordance with an extended standard in which a certain standard is extended, wherein if a receiver complying with the extended standard receives the signal, a function defined by the extended standard is attained, and wherein even if the signal is received by a receiver complying with only an original standard, the communication apparatus and the communication method do not bring about an erroneous reception.

The present invention provides a communication apparatus for and a communication method of transmitting a signal in accordance with an extended standard in which PPP is extended, wherein if a receiver complying with the extended standard receives the signal, a function is attained correspondingly to the extended standard, and wherein even if the signal is received by a receiver complying with only a PPP standard, the communication apparatus and the communication method do not bring about an erroneous reception.

The present invention provides a communication apparatus for and a communication method of transmitting a signal in accordance with an extended standard in which PPP is extended and a transient stop function of a packet transmission is carried out, wherein if a receiver complying with the extended standard receives the signal, the transient stop function of the packet transmission is carried out, and wherein even if the signal is received by a receiver complying with only the PPP, the communication apparatus and the communication method do not bring about an erroneous reception.

The present invention provides a communication apparatus for and a communication method of transmitting a signal in accordance with an extended standard in which PPP is extended and a transient stop function of a packet transmission is carried out when a transmission FIFO included in a transmitter becomes at an underflow state, wherein if a receiver complying with the extended standard receives the signal, the transient stop function of the packet transmission is carried out, and wherein even if the signal is received by a receiver complying with only the PPP, the communication apparatus and the communication method do not bring about an erroneous reception.

The present invention provides a communication apparatus for and a communication method of transmitting a signal in accordance with an extended standard in which PPP is extended and a transmission speed is reduced when a reception FIFO included in a transmitter becomes at an overflow state, wherein if a receiver complying with the extended standard receives the signal, the function of reducing the transmission speed is carried out, and wherein even if the signal is received by a receiver complying with only the PPP, the communication apparatus and the communication method do not bring about an erroneous reception.

Although the invention has been described in its preferred form with a certain degree of particularity, it is understood that the present disclosure of the preferred form has been changed in the details of construction and the combination and arrangement of parts may be resorted to without departing from the spirit and the scope of the invention as hereinafter claimed.

## Claims

1. A communication system comprising:
a first communication unit (1, 2, 31₁, 35₂, 32) sending transmission data (21), a control sequence (24), and an extended control sequence (25, 26, 52, 53, 55, 57), wherein said control sequence (24) is originally defined by a protocol, and said extended control sequence (25, 26, 52, 53, 55, 57) is undefined by said protocol and is provided for requesting an extended operation, and said control sequence (24) includes an abort sequence (24) requesting for abortion of said transmission data (21),
a second communication unit (4, 5, 34, 31₂, 35₁) receiving said transmission data (21), said control sequence (24), and said extended control sequence (25, 26, 52, 53, 55, 57), and executing said extended operation in response to said extended control sequence (25, 26, 52, 53, 55, 57), wherein said extended control sequence (25, 26, 52, 53, 55, 57) includes said abort sequence (24).

2. The communication system according to claim 1, wherein said protocol is PPP (Point-to-Point Protocol), and said abort sequence (24) is represented by "7D, 7E" in the hexadecimal notation.

3. The system according to claim 1 or 2,
wherein said extended control sequence (25, 26, 52, 53, 55, 57) consists of a plurality of said abort sequence (24).

4. The system according to claim 1, 2 or 3,
wherein said first communicating unit (1, 2, 31₁, 35₂, 32) divides said transmission data (21) into a plurality of divided data (21b, 21c, 21d), and sequentially transmits said plurality of divided data (21b, 21c, 21d) to said second communication unit (4, 5, 34, 31₂, 35₁), and
wherein said second communicating unit (4, 5, 34, 31₂, 35₁) reproduces said transmission data (21) from said plurality of divided data (21b, 21c, 21d) in response to said extended control sequence (25, 26).

5. The system according to claim 1, 2, 3 or 4,
wherein said first communication unit (1, 2, 31, 32) includes:
a transmission high order layer (1, 31) generating said transmission data;
a transmission FIFO (6, 36) transiently storing said transmission data (21) , and sequentially outputting said transmission data (21); and
a transmission data processor reading said transmission data (21) out of said transmission FIFO to transmit said transmission data (21) to said second communication unit (4, 5, 34, 35), and
said transmission data processor divides said transmission data (21) into a plurality of divided data (21b, 21c, 21d) when an underflow occurs in said transmission FIFO (6, 36), and sequentially transmits said plurality of divided data (21b, 21c, 21d) to said second communication unit (4, 5, 34, 35), and
said second communication unit (4, 5, 34, 35) reproduces said transmission data (21) from the plurality of divided data (21b, 21c, 21d) in response to said extended control sequence (25, 26).

6. The system according to claim 1, 2, 3, 4 or 5,
wherein said first communication unit (1, 2) includes:
a CRC indicating unit (14) outputting a CRC indication sequence (55) as said extended control sequence (25, 26, 52, 53, 55, 57) for indicating a CRC (Cyclic Redundancy Check) method; and
a CRC calculator (7) calculating a CRC code according to said CRC method and outputting said CRC code to said second communication unit (4, 5), and
said second communication unit (4, 5) executes a CRC on said transmission data (21) in response to said CRC indication sequence (55) based on said CRC code according to said CRC method.

7. The system according to any one of claims 1 to 6,
wherein said first communication unit (1, 2) includes:
an operation test indicating unit (15) outputting an operation test indicating sequence (57) as said extended control sequence (25, 26, 52, 53, 55, 57), and outputting test data (56), and
said second communication unit (4, 5) executes an operation test based on said test data (56) in response to said operation test indicating sequence (57).

8. The system according to any one of claims 1 to 7,
wherein said second communication unit (34, 35) sends a predetermined signal to said first communication (31₁, 32, 35₂) unit in response to said extended control sequence (53).

9. A system according to any one of claims 1 to 8,
wherein said second transmission unit (34, 31₂, 35₁) transmits another transmission data, another control sequence (24), and another extended control sequence (52), and
said another control sequence (24) is originally defined by said protocol, and said another extended control sequence (52) is undefined by said protocol, and said another control sequence (52) includes said abort sequence (24) requesting for abortion of said another transmission data, and
said another extended control sequence (52) includes said abort sequence (24), and
said first communication unit (31, 32) adjusts a rate of transmitting said transmission data (21) in response to said another extended control sequence (52).

10. The communication system according to claim 9, wherein said second communication unit (34, 31₂, 35₁) includes:
a reception FIFO (44₁) receiving and storing said first transmission data (21); and
said another extended control sequence (52) is generated in accordance with a state of said reception FIFO (44₁).

11. The system according to claim 9 or 10,
wherein said first communication unit (31₁, 32, 35₂) divides said transmission data (21) into a plurality of divided data (21b, 21c, 21d), and transmits said plurality of divided data (21b, 21c, 21d), and
said second communicating unit (31₁, 32, 35₂) reproduces said first transmission data (21) from said plurality of divided data (21b, 21c, 21d) in response to said extended control sequence (25, 26).

12. A transmitter (2, 32) comprising:
a data receiver (6, 36₁) receiving transmission data (21); and
a sending unit (7, 8, 9, 37, 39₁, 40₁) sending said transmission data (21), a control sequence (24) and an extended control sequence (25, 26, 52, 53, 55, 57), wherein said control sequence (24) is originally defined by a protocol, and said extended control sequence (25, 26, 52, 53, 55, 57) is undefined by said protocol and is provided for requesting an extended operation, and
said control sequence (24) includes an abort sequence (24) requesting for abortion of said transmission data (21),
and said extended control sequence (25, 26, 52, 53, 55, 57) includes said control sequence (24).

13. The transmitter according to claim 12,
wherein said protocol is PPP (Point-to-Point Protocol), and said abort sequence (24) is represented by "7D, 7E" in the hexadecimal notation.

14. The transmitter according to claim 12 or 13,
wherein said extended control sequence (25, 26, 52, 53, 55, 57) consists of a plurality of said abort sequence (24).

15. A receiver (4, 34) comprising:
a receiving unit (10, 11, 12, 41₁, 42₁, 43₁) receiving transmission data (21), a control sequence (24), and an extended control sequence (25, 26, 52, 53, 55, 57), wherein said control sequence (24) is originally defined by a protocol, and said extended control sequence (25, 26, 52, 53, 55, 57) is undefined by said protocol and is provided for requesting an extended operation, and said control sequence (24) includes an abort sequence (24) requesting for abortion of said transmission data (21); and
an outputting unit (13, 44₁) outputting said transmission data (21),
wherein said receiving unit (10, 11, 12, 41₁, 42₁, 43₁) executes said extended operation in response to said extended control sequence (25, 26, 52, 53, 55, 57), and
said extended control sequence (25, 26, 52, 53, 55, 57) includes said abort sequence (24).

16. The receiver according to claim 15, wherein said protocol is PPP (Point-to-Point Protocol), and said abort sequence (24) is represented by "7D, 7E" in the hexadecimal notation.

17. The receiver according to claim 15 or 16, wherein said extended control sequence (25, 26, 52, 53, 55, 57) consists of a plurality of said abort sequence (24).

18. A communication method comprising:
sending transmission data;
sending a control sequence originally defined by a protocol wherein said control sequence includes an abort sequence requesting for abortion of said transmission data;
sending an extended control sequence, wherein said extended control sequence is undefined by said protocol and is provided for requesting an extended operation;
receiving said transmission data, said control sequence, and said extended control sequence; and
executing said extended operation in response to said extended control sequence, wherein said extended control sequence includes said abort sequence.

19. The communication method according to claim 18, wherein said protocol is PPP (Point-to-Point Protocol), and said abort sequence is represented by "7D, 7E" in the hexadecimal notation.

20. The method according to claim 18 or 19,
wherein said extended control sequence consists of a plurality of said abort sequence.
